# EUROPEAN PATENT APPLICATION

(11) **EP 4 836 360 A1**
(43) Date of publication of application: **04.11.2026**
(21) Application number: 26174767.9
(22) Date of filing: 27.04.2026
(51) Int. Cl.: H04L 12/40

(54) **RESOURCE ALLOCATION METHOD AND APPARATUS FOR SUBNET, CONTROLLER, PROGRAM PRODUCT, AND VEHICLE**

(30) Priority: 30.04.2025 CN 202510571081
(71) Applicant: Robert Bosch GmbH, 70442 Stuttgart (DE)
(72) Inventor: LI, Shuo, Shanghai, 200335 (CN); LIANG, Jinyao, Shanghai, 200335 (CN)

(57) **Abstract**

Embodiments of the present disclosure relate to a resource allocation method and apparatus for a subnet, a controller, a program product, and a vehicle. The method comprises determining a plurality of priorities for a plurality of services within a subnet to be processed by a cloud based on service type, bandwidth requirements, and time sensitivity. The method further comprises dividing network resources of the subnet into a plurality of network resource sets according to the plurality of priorities of the plurality of services. The method further comprises allocating the plurality of network resource sets to the plurality of services according to the plurality of priorities of the plurality of services. Determining the priorities of services within the subnet based on service type, bandwidth requirements, and time sensitivity enables more accurate identification of the actual demand of each service for network resources within the subnet, thereby reasonably establishing the relationship between services and priorities. Within the subnet, allocating network resources for each priority allows for reserving network resources for high-priority services, ensuring that high-priority services are not interrupted.

## Description

### Technical Field

Embodiments of the present disclosure generally relate to the field of communication technology, and specifically to a resource allocation method and apparatus for a subnet, a controller, a program product, and a vehicle.

### Background Art

A subnet is a smaller network formed by dividing a larger network. This larger network may be referred to as a parent network. Parent networks and subnets typically have a hierarchical structure. The parent network may be a backbone network covering a large area. Subnets are smaller local area networks, such as enterprise or home networks. Parent networks and subnets are connected via routers or gateways. Subnets rely on the parent network for wide-area communication.

### Summary of the Invention

Embodiments of the present disclosure provide a resource allocation method and apparatus for a subnet, a controller, a program product, and a vehicle.

According to a first aspect of the present disclosure, a resource allocation method for a subnet is provided. The method comprises determining a plurality of priorities for a plurality of services within a subnet to be processed by a cloud based on service type, bandwidth requirements, and time sensitivity. The method further comprises dividing network resources of the subnet into a plurality of network resource sets according to the plurality of priorities of the plurality of services. The method further comprises allocating the plurality of network resource sets to the plurality of services according to the plurality of priorities of the plurality of services.

According to a second aspect of the present disclosure, a resource allocation apparatus for a subnet is provided. The apparatus comprises: a determination unit, a division unit, and an allocation unit. The determination unit is configured to determine a plurality of priorities for a plurality of services within the subnet to be processed by a cloud based on service type, bandwidth requirements, and time sensitivity. The division unit is configured to divide network resources of the subnet into a plurality of network resource sets according to the plurality of priorities of the plurality of services. The allocation unit is configured to allocate the plurality of network resource sets to the plurality of services according to the plurality of priorities of the plurality of services.

According to a third aspect of the present disclosure, a controller is provided. The controller comprises at least one processor; and a memory. The memory is coupled to the at least one processor and has instructions stored thereon. The instructions, when executed by the at least one processor, cause the controller to perform the method provided according to the first aspect of the present disclosure.

According to a fourth aspect of the present disclosure, a vehicle is provided. The vehicle comprises: the controller according to the third aspect of the present disclosure.

According to a fifth aspect of the present disclosure, a program product is provided. The program product is tangibly stored on a non-volatile, i.e., machine-readable medium and comprises machine-executable instructions that, when executed, cause a machine to perform the method provided according to the first aspect of the present disclosure.

According to a sixth aspect of the present disclosure, a machine-readable storage medium is provided. The machine-readable storage medium has machine-executable instructions stored thereon, wherein the machine-executable instructions are executed by a processor to implement the method provided according to the first aspect of the present disclosure.

### Brief Description of Drawings

The exemplary examples of the present disclosure will be described in further detail in conjunction with accompanying drawings in order to further clarify the above-mentioned and other objectives, features, and advantages of the present disclosure, wherein in the exemplary examples of the present disclosure, the same reference number typically represents the same part.
FIG. 1A shows a schematic diagram of an example environment in which a method and/or apparatus according to an embodiment of the present disclosure may be implemented.
FIG. 1B shows a schematic diagram of another example environment in which a method and/or apparatus according to an embodiment of the present disclosure may be implemented.
FIG. 2 shows a flowchart of a resource allocation method for a subnet according to an embodiment of the present disclosure.
FIG. 3 shows an exemplary flowchart of a process for determining priorities of a plurality of services within a subnet to be processed by a cloud based on service type, bandwidth requirements, and time sensitivity according to an embodiment of the present disclosure.
FIG. 4 shows an exemplary flowchart of a process for dividing network resources of a subnet into a plurality of network resource sets according to a plurality of priorities of a plurality of services according to an embodiment of the present disclosure.
FIG. 5 shows an exemplary flowchart of a process for dynamically adjusting network resources.
FIG. 6 shows a flowchart of further steps of a resource allocation method for a subnet according to an embodiment of the present disclosure.
FIG. 7 shows another flowchart of further steps of a resource allocation method for a subnet according to an embodiment of the present disclosure.
FIG. 8 shows a schematic block diagram of a resource allocation apparatus for a subnet according to an embodiment of the present disclosure.
FIG. 9 shows a schematic block diagram of a controller suitable for implementing embodiments of the present disclosure.

In the various accompanying drawings, the same or corresponding numbers represent the same or corresponding portions. It is to be noted that the elements in the figures are schematic and not to scale.

### Detailed Description of Embodiments

The examples of the present disclosure will be described in further detail below with reference to the accompanying drawings. While certain embodiments of the present disclosure are shown in the accompanying drawings, it should be understood that the present disclosure may be implemented in various forms and should not be construed as being limited to the embodiments set forth herein, rather these embodiments are provided for a more thorough and complete understanding of the present disclosure. It should be understood that the accompanying drawings and examples of the present disclosure are for exemplary purposes only and are not intended to limit the scope of protection of the present disclosure.

In the description of the examples of the present disclosure, the term "comprise" and other similar expressions should be understood as open-ended inclusion, that is, "comprising but not limited to." The term "based on" should be understood as "at least partially based on." The term "one example" or "this example" should be understood as "at least one example." The terms "first", "second", etc. may refer to different or the same object. The text below may comprise other specific and implicit meanings.

Unless defined otherwise, all terms used herein (including technical and scientific terms) have the same meaning as commonly understood by those skilled in the art to whom the present subject matter is directed. It will further be understood that terms such as those defined in commonly-used dictionaries should be construed as having meanings consistent with their meaning in the context of the specification and relevant techniques, and will not be construed in an idealized or overly formal form unless otherwise expressly defined herein. As used herein, a representation that two or more portions are "connected" or "coupled" together shall refer to the incorporation of those portions directly together or through at least one intermediate component.

Subnets can be applied in various fields, such as the vehicle domain, home domain, or body domain. Here, the vehicle domain refers to areas related to vehicles, including, for example, in-vehicle equipment and various networked devices that may be used in vehicles. In-vehicle equipment includes Advanced Driving Assistance Systems (ADAS), Vehicle-to-Everything (V2X) related devices, in-vehicle entertainment systems, vehicle diagnostic equipment, etc. Various networked devices that may be used in vehicles may include networked devices installed in vehicles (e.g., in-vehicle cameras, sensors), smart keys, etc. The home domain refers to areas related to households, including, for example, various voice assistants used at home, auxiliary cooking devices, real-time alarm devices, smart gas stoves, and various electrical appliances. The body domain refers to areas related to electronic devices that can be carried by the human body, including, for example, mobile phones, tablets, blood pressure monitors, equipment supporting cloud gaming, etc.

The present disclosure proposes using subnets to allocate various network resources within a single domain, in order to efficiently and uniformly manage the network resources of multiple services within that single domain.

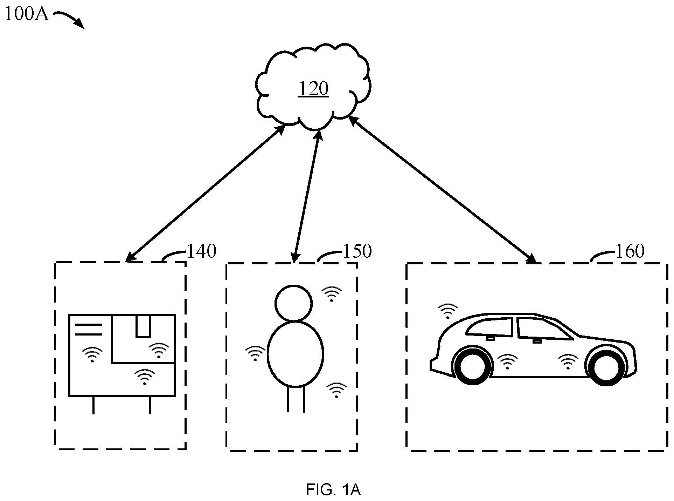

FIG. 1A shows a schematic diagram of an example environment 100A in which a method and/or apparatus according to an embodiment of the present disclosure may be implemented. As shown in FIG. 1A, the example environment 100A includes a vehicle domain 160, a home domain 140, a body domain 150, and a cloud 120. The vehicle domain 160, home domain 140, and body domain 150 are each represented by dashed boxes. The 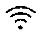 symbols within each dashed box are used to represent networked devices in the respective domain. The various networked devices in the vehicle domain 160, home domain 140, and body domain 150 are communicatively connected to the cloud 120. A subnet can be established within each domain, and the services of the various networked devices within the subnet are managed by a subnet management entity (not shown).

Embodiments of the present disclosure will be described below using the vehicle domain as an example. In vehicles, ADAS can be used to assist driving. For example, sensing technology of ADAS can be used to sense the environment around the vehicle to guide the vehicle to avoid obstacles, provide more precise navigation to the vehicle, etc. Current ADAS is not yet perfect. Moreover, high-level ADAS based on single-vehicle intelligence places extremely high demands on the software and hardware of intelligent vehicles, requiring hardware redundancy in areas such as intelligent sensor configuration and main control chip algorithms. ADAS also faces significant challenges in terms of cost. Therefore, the Vehicle-Road-Cloud Integrated System (VRCIS) is proposed, which combines intelligent vehicles, roadside intelligent facilities, and cloud computing to form an intelligent transportation ecosystem. In VRCIS, on one hand, vehicles can understand road information and upload their own information through communication with the edge/cloud, enhancing vehicle perception and facilitating traffic department management; on the other hand, by uploading some functions to the cloud for processing (commonly known as "function cloudification"), vehicles can reduce their hardware requirements, thereby lowering vehicle manufacturing costs and the difficulty of deploying algorithms.

Due to function cloudification, communication between vehicles and the cloud will become more frequent and important. How to configure network resources between vehicles and the cloud and ensure Quality of Service (QoS) becomes an issue to consider. If all applications in the vehicle, including the driving domain and entertainment domain, achieve centralized control and allocation through a combined network gateway, interference can be reduced and the cost of deploying multiple antennas can be lowered. To achieve service isolation between network transmission control and different devices or applications, the present disclosure proposes using subnets to allocate various network resources within the vehicle domain. For example, centralized hierarchical resource management (or layered resource management) is performed for multiple services within the subnet to efficiently and uniformly manage the network resources (or network services) of these multiple services.

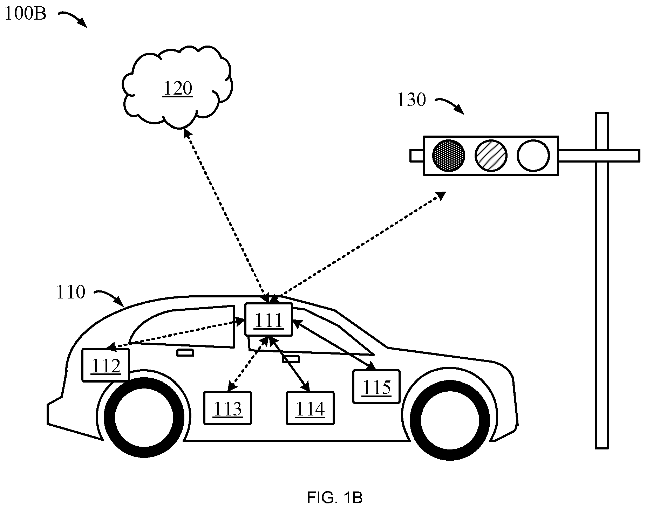

FIG. 1B shows a schematic diagram of an example environment 100B in which a method and/or apparatus according to an embodiment of the present disclosure may be implemented. As shown in FIG. 1B, the example environment 100B includes a vehicle 110, roadside intelligent facilities 130, and a cloud 120. A subnet management entity 111 may be set up in the vehicle 110. The subnet management entity 111 may be integrated into an in-vehicle gateway; more specifically, the subnet management entity 111 may be implemented in a controller of the in-vehicle gateway. In other words, the controller of the in-vehicle gateway can be used to implement the functions of the subnet management entity 111. Alternatively, the subnet management entity 111 may be implemented in a Unified Access Point (UAP). Various devices in the vehicle domain can be uniformly controlled by the subnet management entity 111 to communicate with the roadside intelligent facilities 130 and the cloud 120 via the same gateway. In this way, the subnet in the vehicle can, on one hand, support the vehicle's connection to the base station, and on the other hand, support resource management within the vehicle. FIG. 1B shows some devices in the vehicle domain, such as a wireless sensor 112, a user equipment 113, a cockpit domain 114, and a vehicle controller 115. The cockpit domain, also known as the entertainment domain, includes in-vehicle entertainment systems, etc. In FIG. 1B, solid lines represent wired connections, and dashed lines represent wireless connections. To avoid unimportant details obscuring the focus of the present disclosure, other components in the vehicle 110 are not shown in the example of FIG. 1B.

In the example of FIG. 1B, a subnet is established such that at least a portion of services occurring in the vehicle are transmitted to the cloud for processing via the same gateway of the subnet. In this way, all network connection services in the vehicle, such as entertainment, V2X, and ADAS functions uploaded to the cloud, can be managed through a unified network access device (subnet management entity 111), and network QoS can be ensured through the resource allocation method for subnets described below.

The "subnet" mentioned herein is, for example, an embedded network in a vehicle. For subnets compliant with the 3rd Generation Partnership Project (3GPP) standards, the subnet will support 3GPP communication from the base station to the core network. For subnets not compliant with 3GPP standards, the subnet will support non-3GPP protocols (such as Wi-Fi, Bluetooth, Long Range Radio (LORA)). A subnet can be a highly localized communication system configured to be partially independent of the parent network (traditional network), for example, maintaining at least limited operation during connection loss based on network policies. If the connection to the parent network is temporarily lost, it can still continue to exist.

In some embodiments of the present disclosure, the subnet management entity 111 may exist within the subnet or outside the subnet. It may share necessary configuration and management functions with the parent network to control the subnet. The subnet management entity 11 can be configured such that the parent network is responsible for control functions and/or Radio Resource Management (RRM) functions to maintain QoS requirements within the subnet.

In some embodiments of the present disclosure, all network services within a vehicle can be implemented using various protocols/technologies. These network services involve in-vehicle network communication, vehicle-to-vehicle communication, and the like. As mentioned above, all services within the vehicle are sent to the cloud for processing via the same gateway of the subnet. When the gateway receives a service from an in-vehicle device, it forwards the service to its destination and may change the protocol used by the service according to the destination's requirements. In this case, the gateway can be wired to the vehicle controller.

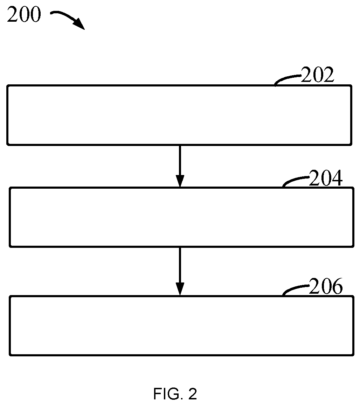

FIG. 2 shows a flowchart of a resource allocation method 200 for a subnet according to an embodiment of the present disclosure. The method 200 can be performed by a resource allocation apparatus for a subnet. This resource allocation apparatus is, for example, a software product integrated into an in-vehicle network connectivity device. This resource allocation apparatus can drive ADAS functions uploaded to the cloud and guarantee the performance of such functions. This resource allocation apparatus can reserve network resources from a Mobile Network Operator (MNO) to guarantee communication performance and allocate these resources to in-vehicle services through a reasonable allocation mechanism. This resource allocation apparatus can also be implemented via software and hardware, for example, it can be a controller within a gateway. This controller can be represented, for example, as the subnet management entity 111 in FIG. 1B. Next, using the subnet management entity 111 as the execution subject, the method 200 is schematically described. Referring to FIG. 2, method 200 may include blocks 202 to 206.

At block 202, the subnet management entity 111 determines a plurality of priorities for a plurality of services within the subnet to be processed by a cloud based on service type, bandwidth requirements, and time sensitivity. In a vehicle domain, service types include, for example, driving-related services and non-driving-related services. The bandwidth requirements and time sensitivity for each service can be determined according to the specific needs of that service. The plurality of priorities can be determined based on various combinations of service type, bandwidth requirements, and time sensitivity.

At block 204, the subnet management entity 111 divides the network resources of the subnet into a plurality of network resource sets according to the plurality of priorities of the plurality of services. Each priority may correspond to one network resource set, and the size of each network resource set may be different. In some embodiments of the present disclosure, the network resources in each network resource set are not reused.

At block 206, the subnet management entity 111 allocates the plurality of network resource sets to the plurality of services according to the plurality of priorities of the plurality of services. Here, "allocation" can be an initial allocation and can change dynamically in subsequent processes.

Determining the priorities of services within the subnet based on service type, bandwidth requirements, and time sensitivity enables more accurate identification of the actual demand of each service for network resources within the subnet, thereby reasonably establishing the relationship between services and priorities. Within the subnet, allocating network resources for each priority allows for reserving network resources for high-priority services, ensuring that high-priority services are not interrupted.

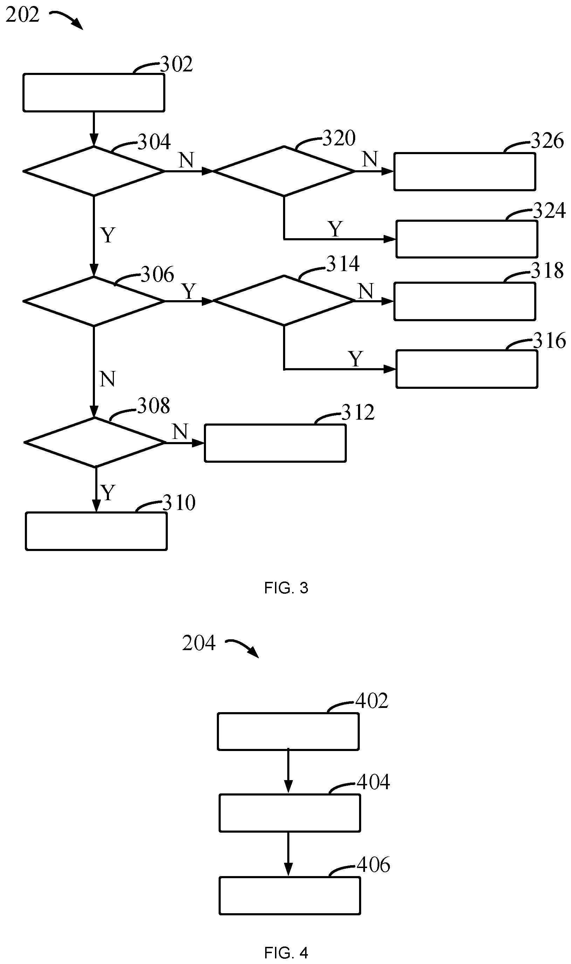

The centralized service management proposed by embodiments of the present disclosure requires the subnet management entity 111 to intelligently manage connections from different applications. Critical applications (e.g., Autonomous Emergency Braking (AEB), Adaptive Cruise Control (ACC), traffic light information, etc., connected to the subnet management entity 111) should obtain higher priorities, and the network resources they require should always be guaranteed. In view of this, embodiments of the present disclosure propose specific implementations for determining the priorities of a plurality of services within the subnet to be processed by the cloud. FIG. 3 shows an exemplary flowchart of a process for determining priorities of a plurality of services within a subnet to be processed by a cloud based on service type, bandwidth requirements, and time sensitivity according to an embodiment of the present disclosure.

At block 302, the subnet management entity 111 determines the importance of a target service among the plurality of services based on the type of the target service. In one example, the importance is determined based on whether the importance level of the target service exceeds a preset threshold. In another example, the importance refers to the relative importance of the target service compared to all services within the subnet. In other words, the importance is a ranking obtained after sorting all services.

At block 304, the subnet management entity 111 determines whether the importance of the target service is high. In some embodiments of the present disclosure, the subnet is applied in a vehicle. In this case, if the target service is a driving-related service, the importance of the target service is high. If the target service is a non-driving-related service, the importance of the target service is low (i.e., not high). In other embodiments of the present disclosure, the importance can also have more levels. In one example, the importance includes three or more of high, medium-high, medium-low, and low.

If the importance of the target service is high ("Y" at block 304), at block 306, the subnet management entity 111 determines whether the bandwidth requirement of the target service exceeds a bandwidth threshold. If the bandwidth requirement of the target service does not exceed the bandwidth threshold ("N" at block 306), at block 308, the subnet management entity 111 determines whether the time sensitivity of the target service is high.

If the time sensitivity of the target service is high ("Y" at block 308), i.e., the bandwidth requirement of the target service does not exceed the bandwidth threshold and the time sensitivity of the target service is high, then at block 310, the subnet management entity 111 determines the priority of the target service as a first priority.

If the time sensitivity of the target service is not high ("N" at block 308), i.e., the bandwidth requirement of the target service does not exceed the bandwidth threshold and the time sensitivity of the target service is low, then at block 312, the subnet management entity 111 determines the priority of the target service as a second priority.

If the bandwidth requirement of the target service exceeds the bandwidth threshold ("Y" at block 306), then at block 314, the subnet management entity 111 determines whether the time sensitivity of the target service is high. If the time sensitivity of the target service is high ("Y" at block 314), i.e., the bandwidth requirement of the target service exceeds the bandwidth threshold and the time sensitivity of the target service is high, then at block 316, the subnet management entity 111 determines the priority of the target service as a third priority.

If the time sensitivity of the target service is not high ("N" at block 314), i.e., the bandwidth requirement of the target service exceeds the bandwidth threshold and the time sensitivity of the target service is low, then at block 318, the subnet management entity 111 determines the priority of the target service as a fourth priority.

If the importance of the target service is not high ("N" at block 304), at block 320, the subnet management entity 111 determines whether the time sensitivity of the target service is high. If the time sensitivity of the target service is high (a "Y" at block 320), then at block 324, the subnet management entity 111 determines the priority of the target service as a fifth priority.

If the time sensitivity of the target service is not high (an "N" at block 320), then at block 326, the subnet management entity 111 determines the priority of the target service as a sixth priority.

In the embodiment of FIG. 3, the priority order from the first priority to the sixth priority decreases sequentially. That is to say, the first priority has the highest priority order, and the sixth priority has the lowest priority order.

The subnet management entity 111 according to embodiments of the present disclosure will take over services from different applications/devices. These services originate from various applications and have different QoS requirements. Therefore, hierarchical quality of service assurance is very important, as it can ensure that different types of in-vehicle applications (e.g., safety, entertainment, and information services) receive appropriate network resources according to their needs. Embodiments of the present disclosure provide hierarchical QoS assurance through different levels of QoS policies based on service priority and real-time requirements.

Hierarchical QoS control in the network ensures that different types of network traffic receive appropriate service levels to meet their specific requirements. The method of the present disclosure can prioritize critical data, such as real-time applications like video streaming or autonomous driving, by allocating necessary resources like bandwidth and reducing latency. By efficiently managing network traffic, hierarchical QoS control improves the performance and reliability of services, ensuring that high-priority tasks are not interrupted by low-priority traffic, thereby optimizing the user experience for various applications.

In some embodiments of the present disclosure, QoS assurance for the parent network is determined through user configuration by the MNO, and QoS assurance for the parent network can be started, stopped, and changed in real-time according to user needs, for example, via an open gateway application programming interface (open gateway API).

In some embodiments of the present disclosure, for services destined for locations outside the vehicle, to achieve hierarchical congestion control, all connected functions within the vehicle need to define QoS layers for their uplink and downlink traffic. The layers for uplink and downlink can differ based on data and requirements. For example, in the process of determining the plurality of priorities for the plurality of services within the subnet to be processed by the cloud based on service type, bandwidth requirements, and time sensitivity, the subnet management entity 111 can determine the uplink bandwidth requirements and downlink bandwidth requirements of a target service among the plurality of services. Concurrently, the subnet management entity 111 can determine the uplink time sensitivity and downlink time sensitivity of the target service. Then, the subnet management entity 111 can determine the uplink priority of the target service based on the type of the target service, the determined uplink bandwidth requirements, and the determined uplink time sensitivity. Concurrently, the subnet management entity 111 can determine the downlink priority of the target service based on the type of the target service, the determined downlink bandwidth requirements, and the determined downlink time sensitivity. In embodiments where QoS layers are not separately defined for uplink and downlink traffic, the higher of the uplink priority and the downlink priority of the target service can be determined as the priority of the target service. This reasonably establishes the relationship between the target service and its priority, ensuring that neither the uplink nor the downlink traffic of the target service is interrupted.

In the example of FIG. 3, six priorities are proposed, corresponding to six QoS layers. These six QoS layers may include four ADAS-specific layers and two general layers. The following introduces examples of these six priorities in order from highest to lowest priority.

The first priority can be used for a driving dedicated low bandwidth deterministic connection (DLDC). This layer is dedicated to supporting basic services related to ADAS systems and vehicle operation, as well as applications with extremely low bandwidth requirements. These applications are always guaranteed to maintain ADAS systems and vehicle operation before network failure occurs. Services at this layer include, for example, real-time vehicle location, time synchronization messages for upload services, and vehicle control/warning messages for download services.

The second priority can be used for a driving dedicated low bandwidth normal connection (DLNC). Not all ADAS functions have extremely high requirements for time sensitivity. For some applications that can tolerate slightly longer delays, this QoS assurance layer will apply when the required bandwidth is not large. Services at this layer include, for example, vehicle status reports for upload services, and road/weather information for download services.

The third priority can be used for a driving dedicated high bandwidth deterministic connection (DHDC). This layer is designed to support time-sensitive driving functions. Data required for driving functions is transmitted in this layer to ensure data freshness and function reliability. This layer is the most expensive and difficult, as it requires the most complex quality of service guarantees and places the highest demands on parent network support. Services at this layer include, for example, video uploads for cloud-enhanced ADAS functions for upload services, and real-time high-definition maps for download services.

The fourth priority can be used for a driving dedicated high bandwidth normal connection (DHNC). Guaranteeing high-bandwidth services has always been relatively expensive and complex, but for ADAS systems and vehicle management systems, these high-bandwidth services are still essential. For applications with lower time sensitivity, this layer will provide a relative balance between cost and performance. Services at this layer include, for example, map updates and cloud training models.

The fifth priority can be used for a normal guaranteed connection (NGC). This layer will provide higher priority for some time-sensitive or vehicle system-related tasks. Although vehicle system-related tasks do not affect the ongoing driving process, they can affect the current or future user experience. Services at this layer include, for example, over-the-air technology (OTA) and vehicle driving video recording.

The sixth priority can be used for a normal connection (NC). This layer is the most general traffic, mainly involving entertainment functions. These functions do not affect vehicle operation. Services at this layer include, for example, normal entertainment functions.

Here, "normal connection" mainly refers to services that do not affect the driving process, do not frequently occur during driving, and generally do not occur again during driving. This part of the traffic will not have reserved communication resources, nor will advanced delay control techniques be applied; it can only be guaranteed through priority adjustment.

To more intuitively demonstrate the priorities proposed by embodiments of the present disclosure, the following exemplarily lists exemplary parameters corresponding to the six priorities in tabular form.

**Table 1**

| Priority | Reserved Bandwidth | (Potential) Bandwidth Limitation | Traffic Priority | Advanced Delay Control | Availability Guarantee | Delay Guarantee | Typical Applications |
|---|---|---|---|---|---|---|---|
| DLDC | Yes | <200 Kbps | High | All | Always | <20 ms | Basic and Emergency Information |
| DLNC | Yes | <200 Kbps | Medium | Partial | High | <50 ms | Vehicle/ Environment Information |
| DHDC | Yes | 200K-10 Mbps | High | All | Medium | <100 ms | Cloud ADAS Functions |
| DHNC | Yes | 200K-10 Mbps | Medium | Partial | Medium | <1 s | Model-related or Map-related Applications |
| NGC | No | None | Medium | None | Best Effort | None | User Experience |
| NC | No | None | Low | None | Best Effort | None | Entertainment |

Differences between priority layers are reflected in resource settings and the application of QoS assurance techniques. For the ADAS layer, transmission bandwidth is always reserved by the MNO and network interface settings. Additionally, for layers with high latency requirements, advanced latency management methods will also be implemented to keep transmission latency below predefined thresholds. Network queues will also be set very low to maintain data freshness.

FIG. 4 shows an exemplary flowchart of a process for dividing network resources of a subnet into a plurality of network resource sets according to a plurality of priorities of a plurality of services according to an embodiment of the present disclosure. At block 402, the subnet management entity 111 determines, for each priority among the plurality of priorities, the total network resource amount required by respective services having that priority. At block 404, the subnet management entity 111 sequentially designates a single priority among the plurality of priorities as a target priority in descending order of the plurality of priorities. At block 406, the subnet management entity 111 selects a target network resource set for the target priority from the network resources. The target network resource set has the total network resource amount required by the respective services of the target priority. This allows network resources to be allocated preferentially to high-priority services.

To determine the importance and time sensitivity of different applications, embodiments of the present disclosure may prioritize them before deployment. For high-priority applications, network resources can be reserved to ensure they are not interrupted during processing. Conversely, entertainment-related network applications are typically assigned lower priorities.

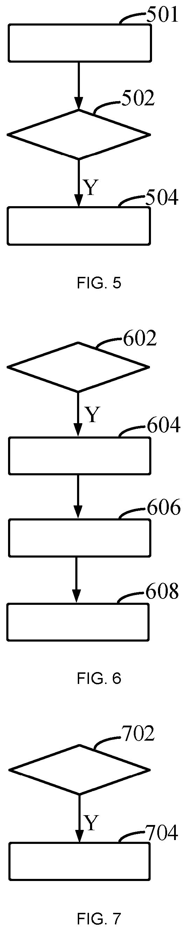

As described above, when the subnet management entity 111 allocates the plurality of network resource sets to the plurality of services according to the plurality of priorities of the plurality of services, it may first perform an initial allocation, which can be dynamically adjusted in subsequent processes. FIG. 5 shows an exemplary flowchart of a process for dynamically adjusting network resources. At block 501, the subnet management entity 111 designates each priority among the plurality of priorities as a target priority and allocates the target network resource set for the target priority to the respective services having the target priority. At block 502, the subnet management entity 111 determines whether the total network resource amount required by services with a higher priority has increased. If it is determined that the total network resource amount required by services with a higher priority has increased ("Y" at block 502), then at block 504, the subnet management entity 111 allocates at least a portion of network resources from a corresponding lower-priority network resource set to the services with the higher priority. In this way, when network resources are insufficient, low-priority applications (e.g., entertainment-related network applications) may be interrupted or degraded to protect high-priority applications.

FIG. 6 shows a flowchart of further steps of a resource allocation method for a subnet according to an embodiment of the present disclosure. At block 602, the subnet management entity 111 determines whether the uplink service data of two or more services is identical. If the uplink service data of two or more services is identical ("Y" at block 602), then at block 604, the subnet management entity 111 determines the priorities of the two or more services. At block 606, the subnet management entity 111 determines, based on the priorities of the two or more services, a second service with the highest priority among the two or more services. At block 608, the subnet management entity 111 uploads the uplink service data of the second service and ignores the uplink service data of other services among the two or more services. Here, the other services are the services among the two or more services other than the second service. In this way, identical uplink service data does not need to be repeatedly sent to the cloud, thereby saving network resources.

In one example, different applications may need to send the same data. For instance, both cloud-enhanced road sign recognition (RSR) and cloud-enhanced AEB send video captured by the front camera to the cloud, and the video data they need to send has different priorities. In this case, the video captured by the front camera will be sent at the highest requested layer (the layer with the highest priority) and shared in the cloud.

FIG. 7 shows a flowchart of further steps of a resource allocation method for a subnet according to an embodiment of the present disclosure. At block 702, the subnet management entity 111 determines whether the destination address in a message containing a request for a first service occurring in the vehicle is located within the vehicle. If the destination address of the first service is located within the vehicle ("Y" at block 702), the subnet management entity 111 may determine that the first service is not directly sent to the cloud for processing. At block 704, the subnet management entity 111 forwards the first service to a control unit in the vehicle corresponding to the type of the first service for processing. In some embodiments of the present disclosure, the control unit in the vehicle corresponding to the type of the first service determines whether the first service needs to be processed by the cloud. If the first service does not need to be processed by the cloud, the control unit in the vehicle corresponding to the type of the first service processes the relevant data of the first service. If the first service needs to be processed by the cloud, the control unit in the vehicle corresponding to the type of the first service transmits the relevant data of the first service to the cloud via the gateway of the subnet.

The aforementioned first service may be a driving-related service or a non-driving-related service. In the example of FIG. 7, when the destination of the aforementioned message is inside the vehicle, different services may arrive at the UAP in different ways. If the first service is a driving-related service, the subnet management entity 111 may forward the first service to a control unit in the vehicle corresponding to driving-related services. Such control units include, for example, the central processor of the vehicle's ADAS. For instance, the relevant data of the first service may involve data collected by sensors deployed around the vehicle using wireless connections. In this case, the subnet management entity 111 may relay the first service to the central processor of the vehicle's ADAS. The central processor of the ADAS can process the first service accordingly (e.g., compression, data encapsulation, etc.). If the central processor of the ADAS determines that the first service is to be further processed by the cloud, the central processor may send the processed first service to the cloud for processing via the gateway of the subnet. If the first service is a non-driving-related service, the subnet management entity 111 may forward the first service to a control unit in the vehicle corresponding to non-driving-related services. Such control units include, for example, the controller of the in-vehicle entertainment system. For instance, the relevant data of the first service may come from information generated by passengers accessing the central entertainment unit via Wi-Fi. In this case, the first service may be relayed to the controller of the in-vehicle entertainment system. The controller of the in-vehicle entertainment system can process the relevant data of the first service. In one example, reserved links may be set up for services from sensors to ensure that the freshness and latency of data from the sensors meet requirements.

In some embodiments of the present disclosure, the centralized gateway will implement various congestion control and latency management methods, including Low Latency on Shared Spectrum (L4S), Time-Sensitive Networking (TSN), Deterministic Networking (DetNet), traffic offloading, and others. The overall communication resources are determined by the user's profile in the Mobile Network Operator (MNO) and can be configured via the Global System for Mobile Communications Association (GSMA) Open Gateway. To meet the requirements of these technologies, the gateway can also support advanced time synchronization techniques, namely the Precision Time Protocol (PTP) and the Global Navigation Satellite System (GNSS).

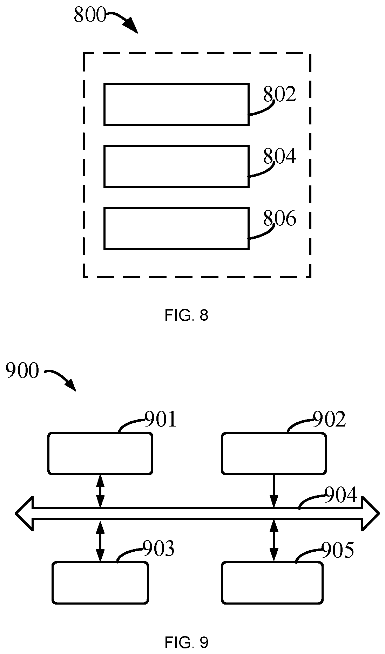

FIG. 8 shows a block diagram of a resource allocation apparatus 800 for a subnet according to some embodiments of the present disclosure. As shown in FIG. 8, the apparatus 800 includes a determination unit 802, a division unit 804, and an allocation unit 806. The determination unit 802 is configured to determine a plurality of priorities for a plurality of services within the subnet to be processed by a cloud based on service type, bandwidth requirements, and time sensitivity. **The** division unit 804 is configured to divide network resources of the subnet into a plurality of network resource sets according to the plurality of priorities of the plurality of services. **The** allocation unit 806 is configured to allocate the plurality of network resource sets to the plurality of services according to the plurality of priorities of the plurality of services.

In some embodiments of the present disclosure, the determination unit 802 includes a first sub-determination unit, a second sub-determination unit, a third sub-determination unit, and a fourth sub-determination unit. The first sub-determination unit is configured to determine uplink bandwidth requirements and downlink bandwidth requirements of a target service among the plurality of services. The second sub-determination unit is configured to determine uplink time sensitivity and downlink time sensitivity of the target service. The third sub-determination unit is configured to determine an uplink priority of the target service based on the type of the target service, the determined uplink bandwidth requirements, and the determined uplink time sensitivity. The fourth sub-determination unit is configured to determine a downlink priority of the target service based on the type of the target service, the determined downlink bandwidth requirements, and the determined downlink time sensitivity.

In some embodiments of the present disclosure, the determination unit 802 includes a fifth sub-determination unit, a sixth sub-determination unit, a seventh sub-determination unit, an eighth sub-determination unit, a ninth sub-determination unit, and a tenth sub-determination unit. The fifth sub-determination unit is configured to determine an importance of a target service among the plurality of services based on the type of the target service. The sixth sub-determination unit is configured to, if the importance of the target service is high, determine whether a bandwidth requirement of the target service exceeds a bandwidth threshold and whether a time sensitivity of the target service is high. The seventh sub-determination unit is configured to, if the bandwidth requirement of the target service does not exceed the bandwidth threshold and the time sensitivity of the target service is high, determine a priority of the target service as a first priority. **The** eighth sub-determination unit is configured to, if the bandwidth requirement of the target service does not exceed the bandwidth threshold and the time sensitivity of the target service is low, determine the priority of the target service as a second priority. The ninth sub-determination unit is configured to, if the bandwidth requirement of the target service exceeds the bandwidth threshold and the time sensitivity of the target service is high, determine the priority of the target service as a third priority. The tenth sub-determination unit is configured to, if the bandwidth requirement of the target service exceeds the bandwidth threshold and the time sensitivity of the target service is low, determine the priority of the target service as a fourth priority. The priority order from the first priority to the fourth priority decreases sequentially.

In some embodiments of the present disclosure, the determination unit 802 further includes an eleventh sub-determination unit, a twelfth sub-determination unit, and a thirteenth sub-determination unit. The eleventh sub-determination unit is configured to, if the importance of the target service is low, determine whether the time sensitivity of the target service is high. The twelfth sub-determination unit is configured to, if the time sensitivity of the target service is high, determine the priority of the target service as a fifth priority. The thirteenth sub-determination unit is configured to, if the time sensitivity of the target service is low, determine the priority of the target service as a sixth priority. The priority order of the fifth priority is lower than that of the fourth priority, and the priority order of the sixth priority is lower than that of the fifth priority.

In some embodiments of the present disclosure, the subnet is applied in a vehicle. In a case where the target service is a driving-related service, the importance of the target service is high. In a case where the target service is a non-driving-related service, the importance of the target service is low.

In some embodiments of the present disclosure, the subnet is applied in a vehicle. The apparatus 800 further includes an establishment unit. The establishment unit is configured to establish the subnet such that at least a portion of services occurring in the vehicle are transmitted to the cloud for processing via a same gateway of the subnet.

In some embodiments of the present disclosure, the subnet is applied in a vehicle. The apparatus 800 further includes a second determination unit, a processing unit, and a forwarding unit. The second determination unit is configured to determine whether a first service occurring in the vehicle needs to be processed by the cloud. The second determination unit may be included in a control unit in the vehicle corresponding to the type of the first service. The processing unit is configured to, if the first service does not need to be processed by the cloud, process relevant data of the first service. The processing unit may be included in the control unit in the vehicle corresponding to the type of the first service. The forwarding unit is configured to, if the first service needs to be processed by the cloud, transmit the relevant data of the first service to the cloud via a gateway of the subnet. The forwarding unit may be included in the control unit in the vehicle corresponding to the type of the first service.

In some embodiments of the present disclosure, the apparatus 800 further includes a third determination unit, a fourth determination unit, and an upload unit. The third determination unit is configured to, if uplink service data of two or more services are identical, determine a second service with the highest priority among the two or more services. The upload unit is configured to upload the uplink service data of the second service and ignore uplink service data of other services among the two or more services. Here, the other services are the services among the two or more services other than the second service.

In some embodiments of the present disclosure, the division unit 804 includes a fourteenth sub-determination unit and a selection unit. The fourteenth sub-determination unit is configured to, for each priority among the plurality of priorities, determine a total network resource amount required by respective services having that priority. The selection unit is configured to sequentially designate a single priority among the plurality of priorities as a target priority in descending order of the plurality of priorities and select a target network resource set for the target priority from the network resources. The target network resource set has the total network resource amount required by the respective services of the target priority.

In some embodiments of the present disclosure, the allocation unit 806 includes an initial allocation unit and an adjustment unit. The initial allocation unit is configured to allocate a target network resource set for a target priority to respective services having the target priority. The adjustment unit is configured to, if the total network resource amount required by services with a higher priority increases, allocate at least a portion of network resources from a corresponding lower-priority network resource set to the services with the higher priority.

In some embodiments of the present disclosure, the subnet is applied in a vehicle domain, a home domain, or a body domain.

FIG. 9 shows a schematic block diagram of a controller 900 that can be used to implement embodiments of the present disclosure. For example, the subnet management entity 111 in FIG. 1B can be implemented using the controller 900. As shown in FIG. 9, the controller 900 includes a processor 901, which can execute various appropriate actions and processes according to computer program instructions loaded into a random access memory (RAM) 903 from computer program instructions stored in a read-only memory (ROM) 902. Various programs and data required for the operation of the controller 900 may also be stored in the RAM 903. The processor 901, the ROM 902, and the RAM 903 are interconnected through a bus 904. An input/output (I/O) interface 905 is also connected to the bus 904.

The various processes and treatments described above, such as method 200, can be executed by the processor 901. For example, in some embodiments, method 200 can be implemented as a software program tangibly contained in a machine-readable medium. In some embodiments, part or all of the software program can be loaded and/or installed onto the controller 900 via the ROM 902. When the software program is loaded into the RAM 903 and executed by the processor 901, one or more actions of method 200 described above can be performed.

In summary, embodiments of the present disclosure determine the priorities of services within a subnet based on service type, bandwidth requirements, and time sensitivity, enabling more accurate identification of the actual demand of each service for network resources within the subnet, thereby reasonably establishing the relationship between services and priorities. Within the subnet, allocating network resources for each priority allows for reserving network resources for high-priority services, ensuring that high-priority services are not interrupted.

The functions described above herein can be performed, at least in part, by one or more hardware logic components. For example, and without limitation, exemplary types of hardware logic components that can be used comprise: Field Programmable Gate Arrays (FPGA), Application Specific Integrated Circuits (ASIC), Application Specific Standard Products (ASSP), System on a Chip (SOC), Complex Programmable Logic Devices (CPLD), and the like.

The program code for implementing the methods of the present disclosure can be written in any combination of one or more programming languages. This program code can be provided to a processor or controller of a general-purpose computer, special-purpose computer, or other programmable data processing devices such that the program code, when executed by the processor or controller, causes the functions/operations specified in the flowcharts and/or block diagrams to be implemented. The program code can be executed entirely on the machine, partly on the machine, as a stand-alone software package partly on the machine and partly on a remote machine, or entirely on a remote machine or server.

In the context of the present disclosure, a machine-readable medium can be a tangible medium that can contain or store programs for use by or in conjunction with an instruction execution system, apparatus, or device. A machine-readable medium can be a machine-readable signal medium or a machine-readable storage medium. The machine-readable medium can comprise, but is not limited to, electronic, magnetic, optical, electromagnetic, infrared, or semiconductor systems, apparatuses, or devices, or any suitable combination of the foregoing. More specific examples of the machine-readable storage medium would comprise electrical connections based on one or more wires, portable computer disks, hard disks, random access memory (RAM), read-only memory (ROM), erasable programmable read-only memory (EPROM or Flash memory), optical fibers, portable compact disc read-only memory (CD-ROM), optical storage devices, magnetic storage devices, or any suitable combination of the foregoing. Furthermore, although operations have been depicted in a specific order, it should be understood that such operations are not required to be performed in the specific order shown or in sequential order, nor are all illustrated operations required to be performed to achieve the desired results. In certain contexts, multitasking and parallel processing may be advantageous. Similarly, although several specific implementation details are included in the above discussion, these should not be construed as limiting the scope of the present disclosure. Certain features described in the context of separate examples can also be implemented in combination in a single implementation. Conversely, various features described in the context of a single implementation can also be implemented separately or in any suitable sub-combination in multiple implementations.

Although the subject matter has been described in language specific to structural features and/or methodological acts, it is to be understood that the subject matter defined in the appended Claims is not necessarily limited to the specific features or acts described above. Rather, the specific features and operations described above are merely exemplary forms of implementing the Claims.

The singular forms of the terms used herein and in the appended claims include the plural, and vice versa, unless the context clearly dictates otherwise. As such, when referring to the singular, it is common to include the plural of the respective terms. Where the term "example" is used herein, particularly when it follows a set of terms, the "example" is merely exemplary and illustrative and should not be considered exclusive or broad.

Further aspects and areas of applicability will become apparent from the description provided herein. It will be understood that various aspects of the present application may be implemented alone or in combination with at least one other aspect. It will also be understood that the description and specific embodiments herein are intended to be illustrative only and are not intended to limit the scope of the present application.

The various examples of the present disclosure have been described above. The descriptions provided are exemplary and not exhaustive, and they are also not limited to the disclosed examples. Many modifications and variations will be apparent to those skilled in the art without departing from the scope and spirit of the described examples. The terms used herein are chosen to best explain the principles and practical application of the various examples or the improvements in the technology in the market, or allow others of ordinary skill in the art to understand the various examples disclosed herein.

## Claims

1. A resource allocation method (200) for a subnet, comprising:
determining (202) a plurality of priorities for a plurality of services within the subnet to be processed by a cloud based on service type, bandwidth requirements, and time sensitivity;
dividing (204) network resources of the subnet into a plurality of network resource sets according to the plurality of priorities of the plurality of services; and
allocating (206) the plurality of network resource sets to the plurality of services according to the plurality of priorities of the plurality of services.

2. The resource allocation method (200) according to Claim 1, wherein determining the plurality of priorities for the plurality of services within the subnet to be processed by the cloud based on service type, bandwidth requirements, and time sensitivity comprises:
determining uplink bandwidth requirements and downlink bandwidth requirements of a target service among the plurality of services;
determining uplink time sensitivity and downlink time sensitivity of the target service;
determining an uplink priority of the target service based on the type of the target service, the determined uplink bandwidth requirements, and the determined uplink time sensitivity; and
determining a downlink priority of the target service based on the type of the target service, the determined downlink bandwidth requirements, and the determined downlink time sensitivity.

3. The resource allocation method (200) according to Claim 1, wherein determining the plurality of priorities for the plurality of services within the subnet to be processed by the cloud based on service type, bandwidth requirements, and time sensitivity comprises:
determining an importance of a target service among the plurality of services based on the type of the target service;
in response to the importance of the target service being high, determining whether a bandwidth requirement of the target service exceeds a bandwidth threshold and whether a time sensitivity of the target service is high;
in response to the bandwidth requirement of the target service not exceeding the bandwidth threshold and the time sensitivity of the target service being high, determining a priority of the target service as a first priority; and
in response to the bandwidth requirement of the target service not exceeding the bandwidth threshold and the time sensitivity of the target service being low, determining the priority of the target service as a second priority;
in response to the bandwidth requirement of the target service exceeding the bandwidth threshold and the time sensitivity of the target service being high, determining the priority of the target service as a third priority; and
in response to the bandwidth requirement of the target service exceeding the bandwidth threshold and the time sensitivity of the target service being low, determining the priority of the target service as a fourth priority;
wherein the priority order from the first priority to the fourth priority decreases sequentially.

4. The resource allocation method (200) according to Claim 3, wherein determining the priorities for the plurality of services within the subnet to be processed by the cloud based on service type, bandwidth requirements, and time sensitivity further comprises:
in response to the importance of the target service being low, determining whether the time sensitivity of the target service is high;
in response to the time sensitivity of the target service being high, determining the priority of the target service as a fifth priority; and
in response to the time sensitivity of the target service being low, determining the priority of the target service as a sixth priority;
wherein the priority order of the fifth priority is lower than that of the fourth priority, and the priority order of the sixth priority is lower than that of the fifth priority.

5. The resource allocation method (200) according to Claim 3 or 4, wherein the subnet is applied in a vehicle, and in a case where the target service is a driving-related service, the importance of the target service is high, and in a case where the target service is a non-driving-related service, the importance of the target service is low.

6. The resource allocation method (200) according to Claim 1, wherein the subnet is applied in a vehicle, and the method further comprises:
establishing the subnet such that at least a portion of services occurring in the vehicle are transmitted to the cloud for processing via a same gateway of the subnet.

7. The resource allocation method (200) according to Claim 1, wherein the subnet is applied in a vehicle, and the method further comprises:
determining whether a first service occurring in the vehicle needs to be processed by the cloud;
in response to the first service not needing to be processed by the cloud, processing relevant data of the first service by a control unit in the vehicle corresponding to the type of the first service; and
in response to the first service needing to be processed by the cloud, transmitting the relevant data of the first service to the cloud via a gateway of the subnet.

8. The resource allocation method (200) according to Claim 1, further comprising:
in response to uplink service data of two or more services being identical, determining a second service with the highest priority among the two or more services;
uploading the uplink service data of the second service; and
ignoring uplink service data of other services among the two or more services, wherein the other services are services among the two or more services other than the second service.

9. The resource allocation method (200) according to Claim 1, wherein dividing the network resources of the subnet into a plurality of network resource sets according to the plurality of priorities of the plurality of services comprises:
for each priority among the plurality of priorities, determining a total network resource amount required by respective services having that priority; and
sequentially designating a single priority among the plurality of priorities as a target priority in descending order of the plurality of priorities, and selecting a target network resource set for the target priority from the network resources, the target network resource set having the total network resource amount required by the respective services of the target priority.

10. The resource allocation method (200) according to Claim 9, wherein allocating the plurality of network resource sets to the plurality of services according to the plurality of priorities of the plurality of services comprises:
allocating the target network resource set for the target priority to respective services having the target priority; and
in response to an increase in the total network resource amount required by services with a higher priority, allocating at least a portion of network resources from a corresponding lower-priority network resource set to the services with the higher priority.

11. The resource allocation method (200) according to Claim 1, wherein the subnet is applied in at least one of: a vehicle domain, a home domain, or a body domain.

12. A resource allocation apparatus (800) for a subnet, comprising:
a determination unit (802) configured to determine a plurality of priorities for a plurality of services within the subnet to be processed by a cloud based on service type, bandwidth requirements, and time sensitivity;
a division unit (804) configured to divide network resources of the subnet into a plurality of network resource sets according to the plurality of priorities of the plurality of services; and
an allocation unit (806) configured to allocate the plurality of network resource sets to the plurality of services according to the plurality of priorities of the plurality of services.

13. A controller (900), comprising:
at least one processor, and
a memory coupled to the at least one processor and having instructions stored thereon, wherein the instructions, when executed by the at least one processor, cause the controller to perform the resource allocation method (200) according to any one of Claims 1-11.

14. A program product comprising machine-executable instructions that, when executed, cause a machine to perform the steps of the resource allocation method according to any one of Claims 1 to 11.

15. A vehicle (110), comprising: the controller according to Claim 13.
